(19)

Europäisches
Patentamt
European
Patent Office
Office européen
des brevets

(11)  **EP 1 928 182 A2**

(12)  **EUROPEAN PATENT APPLICATION**

(43) Date of publication:
    **04.06.2008  Bulletin 2008/23**

(51) Int Cl.:
    *H04N 7/26* (2006.01)      *H04N 7/50* (2006.01)

(21) Application number: **07251079.5**

(22) Date of filing: **15.03.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventor: **Yamaguchi, Noboru**<br>**Minato-ku**<br>**Tokyo 105-8001 (JP)** |
| (30) Priority:  **07.08.2006  JP 2006214814** | (74) Representative: **Maury, Richard Philip**<br>**Marks & Clerk**<br>**90 Long Acre**<br>**London WC2E 9RA (GB)** |
| (71) Applicant: **KABUSHIKI KAISHA TOSHIBA**<br>**Tokyo 105-8001 (JP)** | |

(54)    **Video decoding apparatus and method**

(57)    A video decoding apparatus includes a decoder (111-114) to decode coded data to generate a decoded image signal, a detector (120) to detect a block including no AC component of a DCT coefficient from the coded data, an estimator (120) to estimate a degree of decrease of a given high-frequency component at the time of generation of a motion compensated prediction image, according to a block position indicated by a motion vector with precision of less than one pixel, and a post filter (130) to filter the decoded image signal by decreasing a strength of filtering to be applied to the block to suppress coding noise as the degree of decrease of the given high-frequency component increases and subject the image signal to filtering.

F I G. 1

## Description

The present invention relates to a video decoding apparatus to decode and reproduce data compressed by an encoding scheme such as MPEG (Moving Picture Experts Group) and so on, and a method for the same.

It prevails to deal with motion video as digital data due to rapid development of a video processing technique. In recent years, a digital broadcast receiving TV set or a HDD (Hard Disk Drive) /DVD (Digital Versatile Disk) recorder/ player reproduces a video image compressed in a MPEG-2 format mainly. An MPEG compression scheme represented by MPEG-2 is an encoding scheme using motion compensated prediction (MC) and discrete cosine transform (DCT). When an image is compressed at a low bit rate, a "block noise" occurring at the boundary of a block and a "ringing noise" occurring on the periphery of a block edge due to quantization of DCT coefficients may perceived.

Many measures and devices to remove adaptively noise due to MPEG compression as post-filtering using encoded information are developed. JP-A 2004-140864 discloses a technique for switching adaptively ON/OFF of a deblocking filter and a deringing filter on the basis of the state of DCT coefficient information in consideration with the case that the block has no DCT coefficient. The state of DCT coefficient information represents presence or absence of DC component and presence or absence of AC component. A block noise removal filter (deblocking filter) is disclosed in Japanese Patent No. 3464908, for example, and the ringing noise removal filter (deringing filter) is disclosed in JP-A 2000-102020.

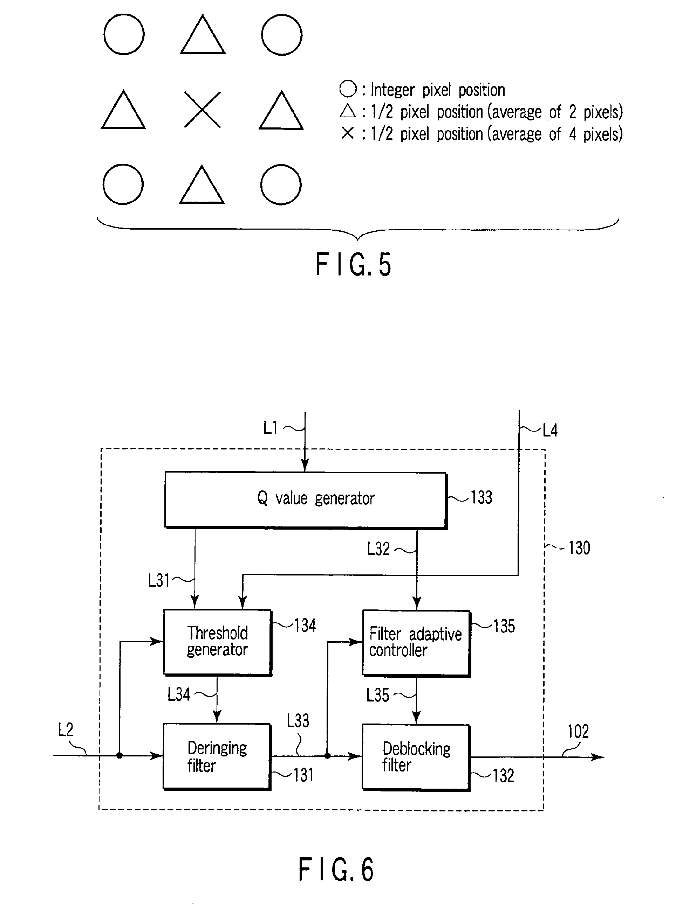

In, for example, MPEG-2, the pixel value subjected to the motion compensated prediction in the block containing no DCT coefficient becomes a decoded pixel value as-is. In MPEG-2, the motion compensated prediction value may be subjected to lowpass filtering according to the pixel position indicated by the motion vector as shown in FIG. 5. In example of FIG. 5, an average of plural pixel values may be calculated. When the prediction value is filtered by the post filter without any regard for this condition, excessive filtering is subjected to the prediction value.

When this influence is watched as a moving image, temporal variation of picture quality is observed between the block having no DCT coefficient and the block having DCT coefficient.

JP-A 2004-140864 discloses post filtering requiring a second memory instead of omitting excessive filtering to the block having no DCT coefficient. This approach provides an effect reducing throughput in filtering when software is implemented. However, when the post filtering is configured in hardware, on/off of a filter circuit does not influence a hardware scale but influence a memory capacity.

According to JP-A 2004-140864 and Japanese Patent No. 3464908, since a block containing no DCT coefficient like a skipped macroblock (skipped MB) is not considered, the block may be subjected to excessive filtering due to the above reasons.

According to the video decoding method and apparatus of the present invention, there is calculated the strength of a filter in performing motion compensated prediction on a block containing no AC component of a DCT coefficient. When this strength is large, the post filtering is suppressed thereby to make it possible to remove a noise inherent to MPEG effectively.

A video decoding apparatus to decode coded data encoded using motion compensated prediction and orthogonal transform coding, comprising: a decoder to decode coded data to generate a decoded image signal; a detector to detect a block including no AC component of a discrete cosine transform coefficient from the coded data; an estimator to estimate a degree of decrease of a given high-frequency component at the time of generation of a motion compensated prediction image, according to a block position indicated by a motion vector with precision of less than one pixel; and a post filter to filter the decoded image signal by decreasing a strength of filtering to be applied to the block to suppress coding noise as the degree of decrease of the given high-frequency component increases and subject the image signal to filtering.

The invention can be more fully understood from the following detailed description when taken in conjunction with the accompanying drawings, in which:

FIG. 1 is a block diagram of a video decoding apparatus according to an embodiment.
FIG. 2 is a diagram of explaining a lowpass filter process applied at the time of generation of a motion compensated prediction image.
FIG. 3 is a block diagram of an encoded information analyzer 120.
FIG. 4 shows a process flow of a DCT coefficient presence/absence determination unit 121.
FIG. 5 shows a process flow of a MC filter strength calculator 122.
FIG. 6 is a block diagram of post-filter unit 130.
FIG. 7 is a block diagram of an example of a ε filter.
FIG. 8 is a diagram for explaining a characteristic of a non-linear arithmetic logical unit 202.
FIG. 9 is a block diagram of an example of a coring process unit.
FIG. 10 is a diagram of explaining a characteristic of coring processor 303.
FIG. 11 is a block diagram of a threshold value generator 134.

FIG. 12 is a diagram of explaining a deblocking filter.
FIG. 13 is a diagram showing a computer system implementing a video decoding method according to an embodiment.

There will now be described a video decoding method and apparatus related to an embodiment referring to accompanying drawings.

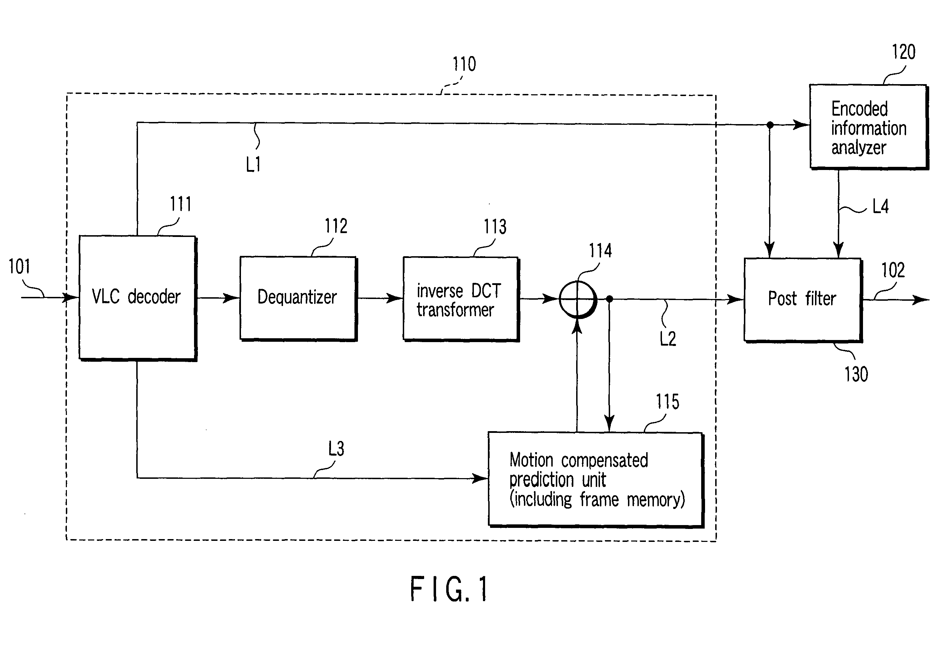

According to a video decoding apparatus shown in FIG. 1, a bit stream of MPEG-2 form is supplied to a video decoder 110 via a line 101. This video decoder 110 comprises a variable length code decoder 111 connected to a line 101, a dequantizer connected to the decoder 111, an inverse DCT transformer 113 connected to the output of the dequantizer 112, an adder 114 having an input terminal connected to the inverse DCT transformer 113, and a motion compensated prediction unit 115 connected to the output of the decoder 111 via a line L3 and having a frame memory. The output of the motion compensated prediction unit 115 is connected to the other input of the adder 114. The output of the variable-length code (VLC) decoder 111 is connected to an encoded information analyzer 120 and a post filter 130 via the line L1. The output of the adder 114 is connected to the post filter 130 via a line L2. The output of the decoding information analyzer 120 is connected to a post filter 130 via a line L4.

In the configuration, when a bit stream of MPEG-2 form is supplied to the VLC decoder 111 via a line 101, the VLC decoder 111 decodes encoded information (mode information of macroblock (MB), quantization information, motion vector information), and supplies the decoded information to the dequantizer 112, to the encoded information analyzer 120 and post filter unit 130 via the line L1, and to the motion compensated prediction unit 115 via the line 3.

The dequantizer 112 dequantizes DCT coefficient information of the decoded information supplied from the VLC decoder 111 to generate a DCT coefficient, and supplies it to the inverse DCT transformer 113. The inverse DCT transformer 113 inverse-transforms the DCT coefficient to reconstruct an image signal.

If the image signal reconstructed with the inverse DCT transformer 113 is a motion compensation error, the adder 114 adds the image signal to a motion compensated prediction value supplied from the motion compensated prediction unit 115 to reproduce a decoded image signal. If the image signal reconstructed with the inverse DCT transformer 113 is not a motion compensation error, it is reproduced as a decoded image signal as-is without being added to the prediction signal supplied from the motion compensated prediction unit 115 with the adder 114. The decoded image signal is output to the line L2 and stored in the frame memory of the motion compensated prediction unit 115.

The motion compensated prediction unit 115 generates a motion compensated prediction value based on the motion vector information supplied from the decoder 111 via the line L3, and supplies it to the adder 114. The adder 114 adds the reconstructed image signal of the inverse DCT transformer 113 and the motion compensated prediction value of the motion compensated prediction unit 115 to generate a decoded image signal. The decoded image signal is supplied to the post filter 130 via the line L2.

The encoded information analyzer 120 analyzes, from the encoded information supplied through the line L1, presence or absence of an AC component of a DCT coefficient of a block, and analyzes filter strength at the time of motion compensation from motion vector information. The encoded information analyzer 120 calculates a parameter of filter strength at the time of motion compensation in every block on the basis of these analysis information, and supplies it to the post filter 130 via the line L4.

The post filter 130 performs post-filtering on the decoded image signal supplied via the line L2 on the basis of the encoded information supplied via the line L1 and the parameter of filter strength at the time of the motion compensation which is supplied via the line L4. The filtered decoded image signal is output via the line 102.

There will now be described the encoded information analyzer 120 in conjunction with the drawings.

<Encoded information analyzer>

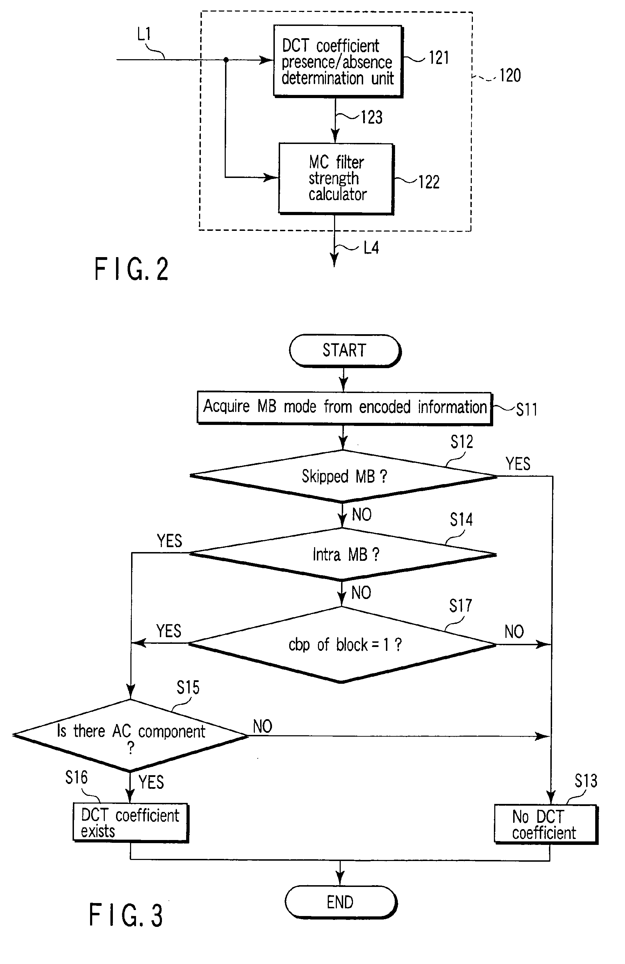

The encoded information analyzer 120 shown in FIG. 2 comprises a DCT coefficient presence/absence determination unit 121 to determine presence or absence of the DCT coefficient and a MC filter strength calculator 122 to calculate the strength of a motion compensation filter using this determination result.

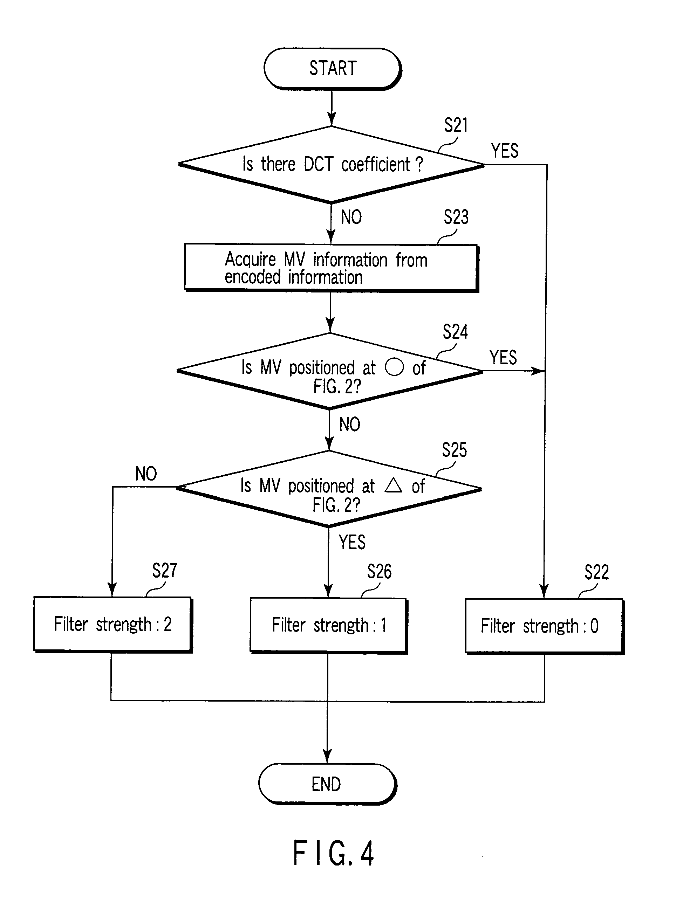

The encoded information is supplied to the DCT coefficient presence/absence determination unit 121 and the motion compensation (MC) filter strength calculator 122 via the line L1. The DCT coefficient presence/absence determination unit 121 analyzes whether a DCT coefficient exists in a block, on the basis of the encoded information according to the flow of FIG. 3. The analyzed information on presence or absence of DCT coefficient is supplied to the MC filter strength calculator 122 via the line 123. The MC filter strength calculator 122 calculates the filter strength about MC of the block according to the flow of FIG. 4. The filter strength information calculated here is supplied to the post filter 130 via the line L4.

A process executed with the DCT coefficient presence/absence determination unit 121 will be explained concretely referring to the flow chart of FIG. 3. In step S11, a mode of macroblock (MB), namely, coded_block_pattern information (cbp) is derived from the encoded information supplied via the line. The coded_block_pattern information (cbp) corresponds to a value indicating whether each block of (1) skip macroblock (MB), (2) intra macroblock (MB) and (3) macroblock has a DCT coefficient

In step S12, it is determined whether the MB that the block belongs to is a skipped MB. When it is determined to be the skipped MB, the process advances to step S13 to set the block to "non-DCT coefficient". When it is not determined in step S12 to be the skipped MB, the process advances to step S14 to determine whether the MB that the block belongs to is an intra MB. When it is determined to be the intra MB, the process advances to step S15 to determine whether the DCT coefficient includes an AC component. When this determination is YES, the block is set to "existence of DCT coefficient" in step S16. When the determination is NO, the process advances to step S13 to set the block to "no DCT coefficient".

When the block is determined to be an intra MB in step S14, the process advances to step S17 to determine whether the flag of the block is "1" from coded_block_pattern information. When the flag is 1, the process advances to step S15 to determine whether AC component is contained in the DCT coefficient. When this determination is YES, the block is set to "existence of DCT coefficient" in step S16. Meanwhile, when the flag of the block is "0" and the DCT coefficient includes no AC component, the process advances to step S13 to set the block to "no DCT coefficient". In this way, the block having no AC component of a DCT coefficient is detected, and set to "no DCT coefficient".

A process executed with the MC filter strength calculator 122 will be explained concretely referring to the flow chart of FIG. 4.

In step S21, when the DCT coefficient presence/absence determination information supplied from the DCT coefficient presence/absence determination unit 121 via the line 123 indicates "no DCT coefficient", the process advances to step S22 to set the filter strength of the block to "0". When the DCT coefficient presence/absence determination information indicates "no DCT coefficient" in step S21, the process advances to step S23 to derive motion vector (MV) information for subjecting the block to motion compensated prediction from the encoded information supplied via the line L1.

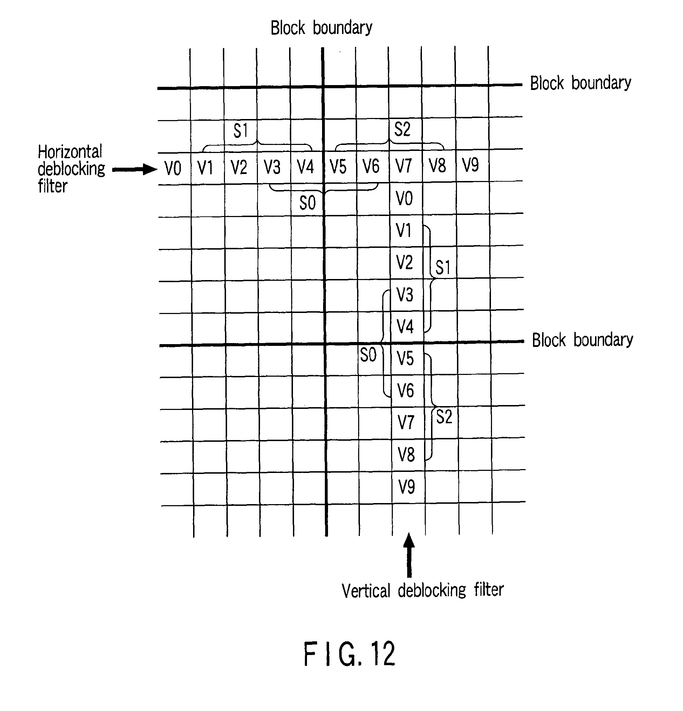

Subsequently, the process advances to step S24 to determine the position indicated by the motion vector information. When the position indicated by the motion vector information is an integer pixel position (○ mark) in FIG. 5, the process advances to step S22 to set the filter strength of the block to "0" because the filtering is not done at the time of motion compensated prediction. When the position indicated by the motion vector information in step S24 is a position marked by "Δ" or "×" in FIG. 11, the process advances to step S25 to determine whether the filter is strong or weak because the filtering is done at the time of motion compensated prediction. The filter is strong when the position indicated by the motion vector information is the position marked by "×". The filter is weak when the position indicated by the motion vector information is the position marked by "Δ".

When the position indicated by the motion vector information in step 25 is the position marked by "Δ" in FIG. 5, the process advances to step S26 to set the filter strength of the block to "1". When the position indicated by the motion vector information in FIG. 25 is the position marked by "×" in FIG. 5, the process advances to step S27 to set the filter strength of the block to "2". The filtering becomes stronger with an increase of the filter strength. In the case of MPEG-2, there are a bi-directional prediction and a dual prime prediction as motion compensated predictions. Motion compensated prediction values indicated by two motion vectors are acquired by these predictions respectively, and motion compensated prediction is done by an average of the motion compensated prediction values. Accordingly, two filter strengths according to the positions indicated by two motion vectors respectively may be calculated to obtain the filter strength in the bi-directional prediction or dual prime prediction by a sum of two filter strengths.

Further, when a motion vector of 1/2 pixel-precision is expressed in an integer value at the time of detecting the position indicated by the motion vector, most significant bits corresponding to horizontal and vertical directions of the motion vector, respectively, represent 1/2 pixel-precision. Therefore, it is possible to determine that the motion vector indicates which one of the positions marked by "○", "Δ" and "×" only by detecting the most significant bit.

There will now be described the post filter 130 of the embodiment in conjunction with drawings.

<Post filter>

The post filter 130 shown in FIG. 6 comprises a deringing filter 131, a deblocking filter 132, a Q value generator 133 for estimating a quality of decoded image based on encoded information, a threshold value generator 134 to generate a threshold for the deringing filter, and a filter adaptive control unit 135 for adaptively controlling on/off or strength of the filter corresponding to the deblocking filter 132.

When via the line L2 is gone through, and a playback picture signal is supplied from the video decoder 110 to the deringing filter 131 via the line L2, the deringing filter unit 131 removes ringing noise from the playback picture signal, and supplies a deringing process signal to the deblocking filter 132 via the line L33. The deblocking filter 132 removes block noise from the deringing process signal of the deringing filter 131 supplied via the line L33. The deringing filter 132 outputs a playback picture signal, from which ringing noise and block noise are removed, via the line 102.

The Q value generator 133 generates, for example, two Q values are generated from the encoded information supplied via the line L1. The Q values are values calculated on the basis of information of quantization width of a block or a block neighborhood thereto. The Q values are set so as to increase with an increase of the quantization width in this embodiment. The Q values are input to the threshold value generator 134 and filter adaptive control unit 135 via the lines L31 and L32, respectively. In this time, the Q values output via lines L31 and L32 may be the same value or different values considering a difference between the deringing filter intended for filtering the inside of the block and the deblocking filter intended for filtering the boundary between the blocks.

Threshold value generator 134 determines a threshold of the deringing filter by using a Q value supplied through the line L31, a to-be-filtered pixel value supplied via the line L2 and a pixel value neighborhood thereto, and filter strength information supplied via the line L4. This threshold is supplied to the deringing filter 131 via the line L34.

According to the embodiment, it is determined every block whether a DCT coefficient is present in coded data, the strength of a lowpass filter to be applied to the block having no DCT coefficient at the time of generating a motion compensated prediction image is determined according to the position indicated by the motion vector, and the block having no DCT coefficient is filtered according to the determined strength of the lowpass filter. In other words, the strength of filter is determined according to the position indicated by the motion vector when pasting a motion compensated reference image to the block having no DCT coefficient. The block is filtered according to the decided filter strength.

As described above, a degree of decrease of a given high-frequency component by the lowpass filter at the time of generation of a motion compensated prediction image is determined according to a block position indicated by a motion vector with precision of less than one pixel. The post filter filters the decoded image signal by decreasing a strength of filtering to be applied to the block to suppress coding noise as the degree of decrease of the given high-frequency component increases and subject the image signal to filtering.

The deringing filter 131 will be explained concretely referring to drawings.

(First example of deringing filter)

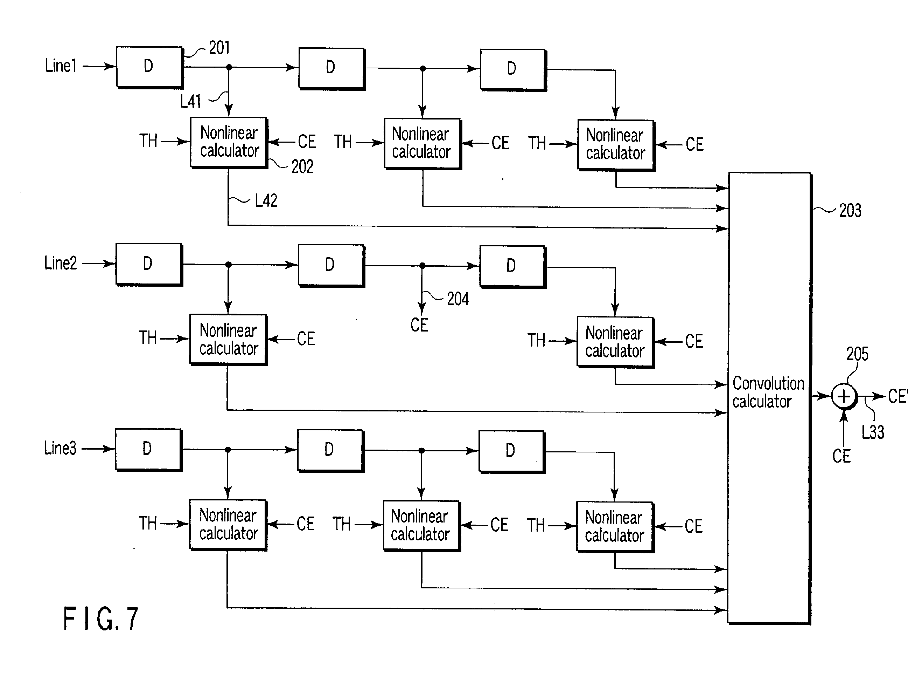

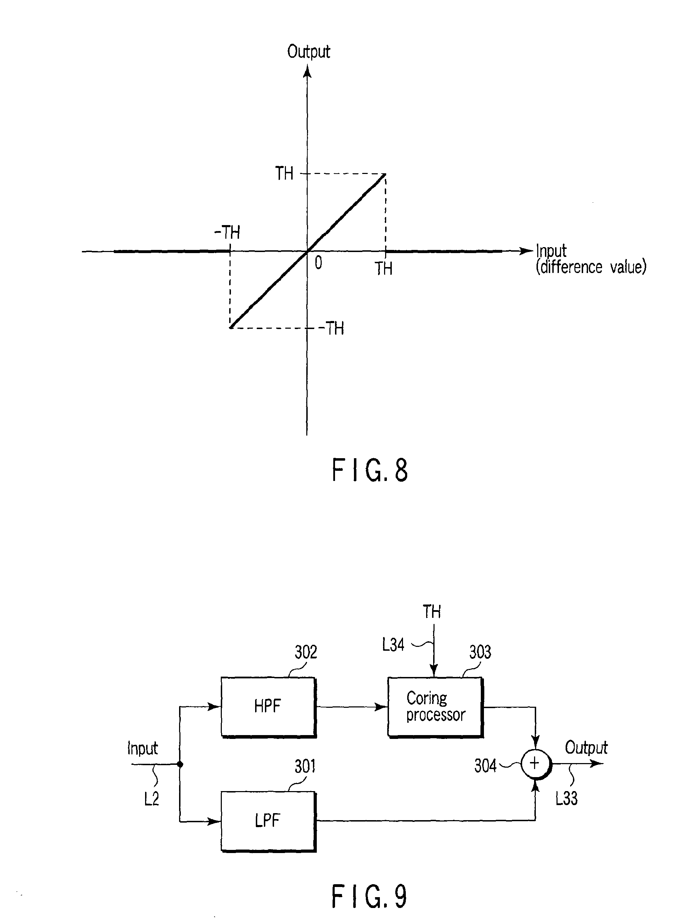

The operative example that realized deringing filter 131 of the present embodiment with a ε filter is explained using FIG. 7 and FIG. 8.

The ε filter is configured as shown in FIG. 7. There will be described an example of a deringing filter using a 3*3 mask configured with a pixel to be filtered and eight pixels adjacently surrounding the pixel.

In FIG. 7, the line 2 is a line including a pixel, and the line 1 is a line over the line 2, and the line 3 is a line under the line 2. Being not illustrated in FIG. 7, there is a memory storing pixel values of Line1, Line2 and Line3, which are supplied via the line L2. In FIG. 7, the block "D" (201) shows delay of one pixel, and the sign "TH" shows a threshold supplied via the line L34. In FIG. 7, the sign "CE" shows a value of the pixel output via the line 204, and the sign "CE'" shows a value of pixel subjected to deringing filtering and output via the line L33.

The eight pixels surrounding the to-be-filtered pixel are nonlinearly processed with the non-linear arithmetic logical units 202 respectively. The operation of the non-linear arithmetic logical unit 202 is explained using FIG. 8. A difference "X-CE" between the pixel value "X" of any one pixel of the surrounding eight pixels which is supplied via the line L41 and the pixel value "CE" is calculated. The difference "X-CE" is processed by nonlinear function whose characteristic changes according to the threshold (TH) supplied via the line L34 as shown in FIG. 8. The processed difference is output via the line L42 of FIG. 7.

The outputs of all non-linear arithmetic logical units 202 in FIG. 7 are supplied to a convolution calculator 203. The convolution calculator 203 convolutes the filter coefficient to the pixel values of the surrounding eight pixels after non-linear operation. The output of the convolution calculator 203 is supplied to an adder 205 and added to the pixel value CE of the to-be-filtered pixel. The output of the adder 205 becomes a pixel value after the to-be-filtered has been filtered.

(Second example of deringing filter)

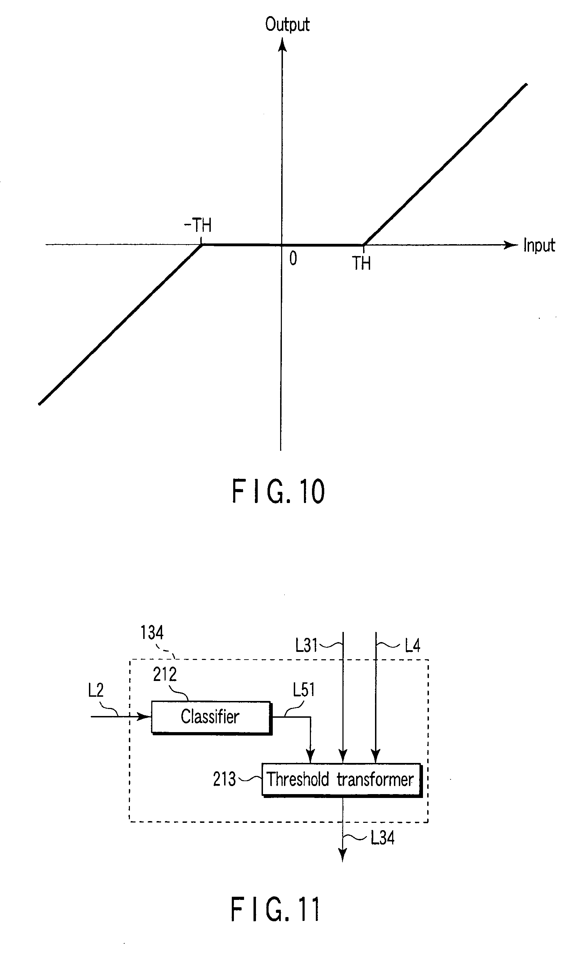

The example realized the deringing filter 131 of the present embodiment by a coring process will be explained using FIGS. 9 and 10.

According to the coring process unit shown in FIG. 9, a lowpass filter (LPF) 301 and a high pass filter (HPF) 302 performing lowpass filtering and high pass filtering on a signal of input pixel value supplied via the line L2 are provided. LPF301 is directly connected to an adder 304, and the output of HPF302 is connected to the adder 304 via a coring processor 303.

In the configuration, HPF302 subjects the signal of to-be-filtered pixel to high pass filtering, and a process result is input to the coring processor 303. The coring processor 303 cuts a minute amplitude component from the to-be-filtered pixel value signal and then supplies it to the adder 304. The adder 304 adds the output signal of the coring processor 303 to the pixel value signal processed with the LPF301 to generate a deringing filtered pixel value signal, and outputs it via the line L33.

A minute amplitude component is cut from a high pass filtered pixel value signal supplied from HPF302 by non-linear function to vary according to the threshold value (TH) supplied via the line L34 as shown in FIG. 10.

The deringing filter 131 removes the minute amplitude from the to-be-filtered pixel value signal by the threshold TH supplied via the line L34 in both examples (1) and (2). Further, in both examples, since the strength of filtering increases as the threshold applied via the line L34 increases, it is necessary to obtain an appropriate threshold adaptively for the ringing noise to be removed without losing picture quality.

In the present embodiment, when the block has no DCT coefficient, the filter strength is calculated at the time of motion compensated prediction (MC). When this filter strength increases, the threshold of the deringing filter is decreased to hard to be filtered. As a result, the excessive filtering is prevented from subjecting to the block to make it possible to suppress the temporal variation of picture quality.

There will now be described the threshold value generator 134 in conjunction with drawings.

(Threshold generator)

The threshold generator 134 shown in FIG. 11 comprises a classifier 212 and a threshold transformer 213. The pixel value of the block (DCT based block) including to-be-filtered pixels subjected to deringing filtering via the line L2 is supplied to the threshold generator 134. The pixel value of the block supplied via the line L2 is supplied to the classifier 212. The classifier 212 obtains the strength of edge of the block from the pixel value of the block, and outputs the edge strength via the line L51. The simplest method of obtaining the edge strength in the block is to detect the maximum and the minimum in the block, and to take the dynamic range (DR) equal to a difference therebetween to be the edge strength.

The threshold transformer 213 is supplied with the Q value (Q) via the line L31, dynamic range (DR) via the line L51 and the filter strength (S) of MC via the line L4. These parameters are transformed into thresholds of the deringing filter and then output via the line L34. The transformation from three parameters (Q, DR, S) to the threshold is performed by function "TH(Q, DR, S)".

Qualitative relation between the ringing noise and two parameters (Q, DR) is as follows.

(1) Influence of ringing due to quantization increases as the quantization width increases (Q increases).
(2) Influence of ringing in the same quantization width increases as the edge strength in the block increases (DR increases). In other words, the function TH(Q, DR, S) has only to be a function increasing with an increase of two parameters (Q, DR).

The function TH(Q, DR, S) has only to decrease with an increase of the parameter S as described above. The function TH(Q, DR, S) may be expressed by the following function equation.

$$TH(Q,\ DR,\ S) = F(S) \times ((1-w) \times Q + w \times DR)$$

where w is a weighting factor of 0 to 1. The function F is a monotonically decreasing function, and has only to be 1 when the value of S is 0, and 0 when the value of S is maximum (the value is 2 in the example of FIG. 4). Because there is no information of quantization width of to-be-filtered MB in the case of skip MB, information of quantization width of the MB that belongs to the pixel value of a reference picture used for motion compensated prediction has only to be used. Information of the latest quantization width in a to-be-filtered picture may be used, and an average of quantization widths of the reference picture may be used. The function TH(Q, DR, S) may be prepared as a table designed beforehand and subjected to threshold-transform by table lookup.

(Deblocking filter and filter adaptive controller)

The deblocking filter 132 and the filter adaptive controller 135 are not limited to the present embodiments, and have only to reduce discontinuity of the block boundary occurring due to quantization by correcting the pixel value of the block boundary of DCT.

The deblocking filter 132 can use a deblocking filter disclosed in Japanese Patent No. 3464908 as shown in FIG. 12. In this deblocking filter, the vertical and horizontal block boundaries are subjected to horizontal and vertical deblocking filtering, respectively.

The values of pixels adjacent to each other at the block boundary are so corrected as to reduce the discontinuity of the block boundary in terms of relation between the waveforms S1 and S2 in FIG. 12. In this time, if the magnitude of change of the waveform S0 across the block boundary is larger than the Q value obtained from the quantization width, it is determined that the change indicates the edge which the image has originally, so that the pixel value is not corrected. In other words, the filter adaptive controller 135 derives information indicating whether the complemented value of pixel and pixel value are corrected, from the waveforms S0, S1, S2 supplied via the line L33 and the Q value supplied via the line L32, and supplies it to the deblocking filter 132 via the line L35.

The deblocking filter 132 receives the pixel value via the Line L33, and corrects the pixel value using the complemented value input via the line L35, when the information indicates necessity of correction of the pixel value, and outputs the pixel value as-is via the line 102, when the information indicates nonnecessity of correction of the pixel value.

The above configuration makes it possible to suppress a change of picture quality due to excessive filtering without needing a frame memory described in JP-A 2004-140864.

The embodiments are explained in terms of a bit stream of MPEG-2 form. However, the present invention can apply to a bit stream of another encoding scheme using MC and DCT.

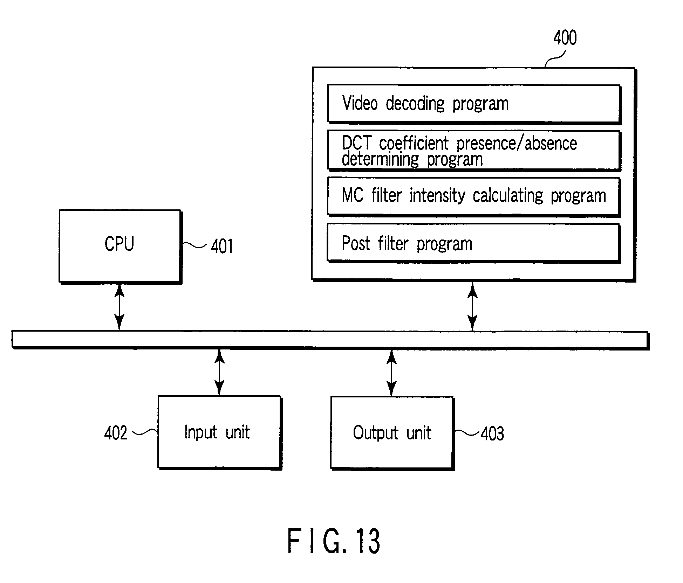

The processes shown in FIGS. 3 and 4 can be executed by a program implemented by the computer system shown in FIG. 13. The computer system of FIG. 13 comprises a memory 400 which stores a video decoding program, a DCT coefficient presence determination program (FIG. 3), a MC filter strength calculation program (FIG. 4), and a post filter program, a CPU 401 executing the programs read out from the memory 400, an input device 402, and an output device 403. The program that can be executed with the computer can be distributed by recording media such as a magnetic disk (flexible disk, a hard disk), a Laser Disk (compact disk-read only memory, DVD), a semiconductor memory, etc.

The video decoding apparatus and method related to the present invention are effective for removing encoding noise occurring in decoding data compressed by MPEG-2, etc. in a digital broadcast compliant television or a video recorder/player apparatus.

According to the embodiment of the present invention, when the noise occurring due to MPEG-compression every screen is removed, the temporal variation of picture quality can be suppressed.

**Claims**

1. A video decoding apparatus to decode coded data encoded using motion compensated prediction and orthogonal transform coding, **characterized by** comprising:

   decoder means (111-114) for decoding coded data to generate a decoded image signal;
   detector means (121) for detecting a block including no AC component of a discrete cosine transform (DCT) coefficient from the coded data;
   estimator means (122) for estimating a degree of decrease of a given high-frequency component at the time of generation of a motion compensated prediction image, according to a block position indicated by a motion vector with precision of less than one pixel; and
   post filter means (130) for filtering the decoded image signal by decreasing a strength of filtering to be applied to the block to suppress coding noise as the degree of decrease of the given high-frequency component increases and subject the image signal to filtering.

2. The apparatus according to claim 1, **characterized in that** the detector means (121) includes detector means for detecting a skipped macroblock as the block including no AC component by an arrangement of an address of the coded data.

3. The apparatus according to claim 1, **characterized in that** the detector means (121) includes detector means for detecting as the block including no AC component a block that coded_block_pattern indicating presence or absence of the DCT coefficient is 0.

4. The apparatus according to claim 1, **characterized in that** the estimator means (122) includes calculator means for calculating strength of interpolation filtering by the number of motion vectors or a noninteger position of a pixel.

5. The apparatus according to claim 4, **characterized in that** the calculator means (122) calculates the strength of interpolation filtering strength from the number of pixels used for calculating a motion compensated prediction value.

6. The apparatus according to claim 1, **characterized in that** the post filter means (130) comprises a deringing filter (131) whose threshold is set at a value decreasing according to an increase of the degree of decrease of the high frequency component.

7. The apparatus according to claim 1, **characterized in that** the post filter means (130) comprises a deringing filter (131) and a deblocking filter (132), and only the deringing filter subjects an image signal to ringing filtering according to the degree of decrease of the high frequency component.

8. A video decoding method of decoding coded data encoded using motion compensated prediction and orthogonal transform coding, **characterized by** comprising:

decoding coded data to generate a decoded image signal;
detecting a block including no AC component of a discrete cosine transform (DCT) coefficient from the coded data;
estimating a degree of decrease of a given high-frequency component due to generation of a motion compensated prediction image, based on a position indicated by a motion vector with precision of less than one pixel; and
filtering the decoded image signal by decreasing a strength of filtering to be applied to the block to suppress coding noise as the degree of decrease of the given high-frequency component increases.

9. The method according to claim 8, **characterized in that** the detecting includes detecting a skipped macroblock as the block including no AC component by an arrangement of an address of the coded data.

10. The method according to claim 8, **characterized in that** the detecting includes detecting as the block including no AC component a block that coded_block_pattern indicating presence or absence of the DCT coefficient is 0.

11. The method according to claim 8, **characterized in that** the estimating includes calculating strength of interpolation filtering by the number of motion vectors or a noninteger position of a pixel.

12. The method according to claim 11, **characterized in that** the calculating includes calculating the strength of interpolation filtering strength from the number of pixels used for calculating a motion compensated prediction value.

13. The method according to claim 8, **characterized in that** the filtering includes deringing filtering with threshold being set at a value decreasing according to an increase of the degree of decrease of the high frequency component.

14. The method according to claim 8, **characterized in that** the filtering includes deringing filtering and deblocking filtering, and only the deringing filtering subjects an image signal to ringing filtering according to the degree of decrease of the high frequency component.

F I G. 1

L1

DCT coefficient
presence/absence
determination unit ~121

~120

~123

MC filter
strength
calculator ~122

~ L4

# F I G. 2

START

Acquire MB mode from encoded information ~S11

S12

Skipped MB ? —— YES

NO

S14

YES

Intra MB ?

NO

S17

YES

cbp of block = 1 ? —— NO

S15

Is there AC component
? —— NO

S16 YES

DCT coefficient
exists

S13

No DCT
coefficient

END

# F I G. 3

START

S21
Is there DCT coefficient ?
YES

NO

S23
Acquire MV information from
encoded information

S24
Is MV positioned at ○ of
FIG. 2?
YES

NO

S25
Is MV positioned at △ of
FIG. 2?

NO

YES

S27
Filter strength : 2

S26
Filter strength : 1

S22
Filter strength : 0

END

F I G. 4

○ : Integer pixel position
△ : 1/2 pixel position (average of 2 pixels)
✕ : 1/2 pixel position (average of 4 pixels)

F I G. 5

F I G. 6

F I G. 7

FIG. 8

FIG. 9

F I G. 10

F I G. 11

F I G. 12

FIG. 13

Video decoding program

DCT coefficient presence/absence determining program

MC filter intensity calculating program

Post filter program

400

CPU — 401

402 — Input unit

Output unit — 403

**REFERENCES CITED IN THE DESCRIPTION**

**Patent documents cited in the description**

- JP 2004140864 A
- JP 3464908 B

- JP 2000102020 A